# EUROPÄISCHE PATENTSCHRIFT

(11) **EP 4 273 176 B1**
(45) Veröffentlichungstag und Bekanntmachung des Hinweises auf die Patenterteilung: **04.12.2024**
(21) Anmeldenummer: 22171949.5
(22) Anmeldetag: 06.05.2022
(51) Int. Cl.: C08F 2/20, C08F 283/01

(54) **HERSTELLUNG VON ALKYL(METH)ACRYLAT-POLYESTER-COPOLYMEREN MITTELS SUSPENSIONSPOLYMERISATION**
PRODUCTION OF ALKYL(METH)ACRYLATE POLYESTER COPOLYMERS BY MEANS OF SUSPENSION POLYMERIZATION
PRODUCTION DE COPOLYMÈRES DE POLYESTER ALKYL(MÉTH)ACRYLATE PAR POLYMÉRISATION EN SUSPENSION

(43) Veröffentlichungstag der Anmeldung: 08.11.2023
(73) Patentinhaber: Röhm GmbH, 64295 Darmstadt (DE)
(72) Erfinder: KELLER, Dr., Bruno, 55263 Wackernheim (DE); BERNHARDT, Dr., Stefan, 63075 Offenbach (DE); LOTZ, Janos, 63571 Gelnhausen (DE)
(74) Vertreter: Röhm Patent Association

(56) Entgegenhaltungen:
- WO-A1-2007/098819
- US-A- 5 648 410
- US-A1- 2008 292 893

## Beschreibung

### Gebiet der Erfindung

Die vorliegende Erfindung betrifft ein Verfahren zur Herstellung von Alkyl(meth)acrylat-Polyester-Copolymeren mittels Suspensionspolymerisation sowie die so hergestellten Alkyl(meth)acrylat-Polyester-Copolymere. Das erfindungsgemäße Verfahren vermeidet insbesondere die Verwendung von Styrol in der Herstellung. Die erfindungsgemäß hergestellten Alkyl(meth)acrylat-Polyester-Copolymere können insbesondere als Binder in Druckfarben eingesetzt werden.

### Stand der Technik

WO 2007/098819 A1 beschreibt eine Zusammensetzung, die einen Copolyester, ein (Meth)acrylathomo- oder -copolymer und ein Pfropfcopolymer aus diesen beiden enthält. Die Herstellung erfolgt in Abwesenheit von Styrol als Lösungs- oder Substanzpolymerisation.

Die in WO 2007/098819 A1 beschriebene Zusammensetzung hat bereits gute Eigenschaften als Phasenvermittler und kann daher als Binder für Druckfarben eingesetzt werden. Allerdings ist ihre Herstellung aufwändig und kostenintensiv. Zudem wird die in WO 2007/098819 A1 beschriebene Zusammensetzung bei der Herstellung als Lösungspolymerisation als gelöste Zusammensetzung erhalten, sodass das Lösungsmittel in der späteren Anwendung der Zusammensetzung durch das in der Lösungspolymerisation eingesetzte Lösungsmittel, insbesondere Propylacetat, festgelegt ist. Der Anwender verliert dadurch die freie Lösungsmittelwahl in der späteren Anwendung der Zusammensetzung.

JP 11158204 beschreibt die Suspensionspolymerisation einer Monomermischung enthaltend Styrol und einen ethylenisch ungesättigten Polyester, wobei Polyvinylalkohol als Emulgator verwendet wird. Durch das beschriebene Verfahren werden gleichmäßig große Polymerpartikel erzeugt.

JP 09241490 beschreibt die Suspensionspolymerisation einer Monomermischung enthaltend ein Polyethylenterephthalat, ein Vinyl-Monomer und ein ungesättigtes Carbonsäureamid in Gegenwart eines Germanium-Katalysators. Das erhaltene Polymer kann unter anderem zur Herstellung von Filmen und Formkörpern eingesetzt werden.

EP 0 462 785 beschreibt eine Harzzusammensetzung für Toner, die ein Suspensionspolymerisat aus einem Polyester, einem Vinylmonomer und einem Divinylmonomer umfasst. Der Polyester ist ein Polykondensat aus Terephthalsäure, Isophthalsäure, einem Hydroxyphenylpropan und verschiedenen Glykolen.

Die im Stand der Technik beschriebenen Copolymere aus Vinylmonomeren und Polyestern weisen teilweise keine ausreichend guten Eigenschaften zur Nutzung als Phasenvermittler und als Bindemittel in Druckfarben auf. Zudem enthalten sie teilweise Styrol. In verschiedenen Anwendungen, wie beispielsweise in Bereichen mit Lebensmittelkontakt oder bei Gegenständen, mit denen Kinder in direkten Kontakt kommen, sind aromatische Monomere, wie Styrol jedoch unerwünscht, wenn nicht untersagt. Zudem sorgen aromatische Monomere häufig für Geruchsbelästigung in der späteren Verwendung der Copolymere.

### Aufgabe

Es bestand daher Bedarf an einem Verfahren zur Herstellung von Polymermischungen enthaltend Alkyl(meth)acrylat-Polyester-Copolymere, das die Nachteile der im Stand der Technik beschriebenen Verfahren nicht oder in vermindertem Maße aufweist. Zudem sollte die Polymermischung, die das Alkyl(meth)acrylat-Polyester-Copolymer enthält, besonders geeignet als Bindemittel in Druckfarben sein.

### Lösung

Gelöst wurde diese Aufgabe durch ein Verfahren zur Herstellung einer Polymermischung, die ein Alkyl(meth)acrylat-Polyester-Copolymer enthält, umfassend die Schritte:
a) Bereitstellen einer ersten flüssigen Phase, die mindestens ein Alkyl(meth)acrylat-Monomer und mindestens einen in dem Alkyl(meth)acrylat-Monomer gelösten Polyester enthält,
b) Bereitstellen einer zweiten flüssigen Phase, die Wasser und mindestens ein darin dispergiertes Suspensionshilfsmittel enthält,
c) Dispergieren der ersten flüssigen Phase in der zweiten flüssigen Phase, wobei sich Tropfen der ersten flüssigen Phase in der zweiten flüssigen Phase bilden,
d) Polymerisation des in der ersten flüssigen Phase enthaltenen mindestens einen Alkyl(meth)acrylat-Monomers und des mindestens einen Polyesters unter Erhalt der Polymermischung, die das Alkyl(meth)acrylat-Polyester-Copolymer enthält,
wobei die Polymerisation in Schritt d) initiiert wird durch mindestens einen Initiator, der entweder in der ersten flüssigen Phase in Schritt a) oder in der zweiten flüssigen Phase in Schritt b) bereitgestellt wird, wobei der mindestens eine Polyester Polycarbonsäureeinheiten und Polyoleinheiten umfasst, wobei der mindestens eine Polyester im Bereich von 0,1 bis 10 mol-% Polycarbonsäureeinheiten mit C-C-Doppelbindung umfasst, bezogen auf die Gesamtstoffmenge an Polycarbonsäureeinheiten.

Es wurde überraschend gefunden, dass durch das erfindungsgemäße Verfahren Polymermischungen herstellbar sind, die geeignet sind als Bindemittel für Druckfarben und die insbesondere zu Polyethylenterephthalat (PET), Polyvinylchlorid (PVC), Polypropylen (PP), Polybutylenterephthalat (PBT) und Polystyrol (PS), eine sehr gute Haftung aufweisen. Gleichzeitig kann auf den Einsatz von Styrol im erfindungsgemäßen Verfahren verzichtet werden.

Das erfindungsgemäße Verfahren erlaubt zudem eine schnelle, lösungsmittelfreie Herstellung von Polymermischungen. Durch das erfindungsgemäße Verfahren können die Polymermischungen als Feststoff erhalten werden, ein aufwändiges Entfernen von Lösungsmittel ist nicht notwendig. In der Anwendung der erfindungsgemäß hergestellten Polymermischung gibt es so keine Limitierung auf ein bestimmtes Lösungsmittel. Dies ist insbesondere vorteilhaft, wenn die erfindungsgemäß hergestellten Polymermischungen beispielsweise als Bindemittel in Druckfarben eingesetzt werden, da beispielsweise auch für Druckfarben gängige Lösungsmittel wie Ethylacetat verwendet werden können.

Da die Polymermischungen als Feststoff, der im Wesentlichen frei ist von Lösungsmittel, erhalten werden, besteht in der späteren Anwendung keine Bindung an ein spezielles Lösungsmittelsystem, wie dies beispielsweise bei der Herstellung mittels Lösungspolymerisation der Fall ist. Da die erhaltenen Polymermischungen kein Lösungsmittel enthalten, sind ihre Transport- und Lagerkosten deutlich reduziert.

Das erfindungsgemäße Verfahren erlaubt zudem sehr gute Raum-Zeit-Ausbeuten und bekannte Apparaturen können eingesetzt werden. Gleichzeitig wird eine Gelierung des in der Polymermischung enthaltenen Alkyl(meth)acrylat-Polyester-Copolymers durch das erfindungsgemäße Verfahren vermieden.

Überraschend wurde zudem gefunden, dass die erfindungsgemäß hergestellten Polymermischungen mit im Stand der Technik beschriebenen Copolymeren vergleichbare Eigenschaften aufweisen, obwohl sie in einer bevorzugten Ausführungsform des erfindungsgemäßen Verfahrens weniger Polyester enthalten. Der geringere Polyesteranteil wirkt sich zudem vorteilhaft auf die Gesamtkosten des erfindungsgemäßen Verfahrens aus.

Nachfolgend wird das erfindungsgemäße Verfahren näher beschrieben.

In Schritt a) des erfindungsgemäßen Verfahrens wird eine erste flüssige Phase, die mindestens ein Alkyl(meth)acrylat-Monomer und mindestens einen in dem Alkyl(meth)acrylat-Monomer gelösten Polyester enthält, bereitgestellt.

Zur Bereitstellung der ersten flüssigen Phase wird der mindestens eine Polyester in dem mindestens einen Alkyl(meth)acrylat-Monomer gelöst. Das Lösen des mindestens einen Polyesters kann nach allen dem Fachmann bekannten Methoden erfolgen. Vorzugsweise wird das mindestens eine Alkyl(meth)acrylat-Monomer zum Lösen des mindestens einen Polyesters auf eine Temperatur im Bereich von 20 °C bis 45 °C gebracht.

Bevorzugt erfolgt das Lösen des mindestens einen Polyesters in dem Alkyl(meth)acrylat unter Rühren.

In der ersten flüssigen Phase liegen das mindestens eine Alkyl(meth)acrylat-Monomer und der mindestens eine Polyester homogen verteilt vor.

Die erste flüssige Phase enthält beispielsweise im Bereich von 0,1 bis 15 Gew.-% des mindestens einen Polyesters, bevorzugt im Bereich von 0,5 bis 5 Gew.-%, besonders bevorzugt im Bereich von 2,5 bis 3,5 Gew.-% bezogen auf das Gesamtgewicht der ersten flüssigen Phase.

Bevorzugt ist daher auch ein Verfahren, bei dem die erste flüssige Phase im Bereich von 0,1 bis 15 Gew.-% des mindestens einen Polyesters enthält, bezogen auf das Gesamtgewicht der ersten flüssigen Phase.

Dementsprechend enthält die erste flüssige Phase beispielsweise im Bereich von 85 bis 99,9 Gew.-% Alkyl(meth)acrylat-Monomer, bevorzugt im Bereich von 95 bis 99,5 Gew.-%, besonders bevorzugt im Bereich von 96,5 bis 97,5 Gew.-% bezogen auf das Gesamtgewicht der ersten flüssigen Phase.

Vorzugsweise addieren sich die Gew.-% des Polyesters, des Alkyl(meth)acrylat-Monomers und des weiter unten beschriebenen, gegebenenfalls in der ersten flüssigen Phase bereitgestellten mindestens einen Initiators und des weiteren Comonomers in der ersten flüssigen Phase zu 100 Gew.-%.

Es ist bevorzugt, dass die erste flüssige Phase außer dem Alkyl(meth)acrylat-Monomer kein weiteres Lösungsmittel enthält.

Bevorzugt besteht die erste flüssige Phase aus dem Alkyl(meth)acrylat-Monomer, dem Polyester und gegebenenfalls dem Initiator und dem weiteren Comonomer.

Die Gew.-% des Polyesters, des Alkyl(meth)acrylat-Monomers und gegebenenfalls des Initiators und des weiteren Comonomers beziehen sich auf die Gew.-% bevor der Polyester, das Alkyl(meth)acrylat-Monomer, der Initiator und das weitere Comonomer miteinander reagiert haben.

Im Rahmen der vorliegenden Erfindung werden unter "Alkyl(meth)acrylat-Monomeren" sowohl Alkylmethacrylat-Monomere als auch Alkylacrylat-Monomere verstanden. Bevorzugt sind C₁-C₁₂-Alkyl(meth)acrylat-Monomere. Unter C₁-C₁₂-Alkyl(meth)acrylat-Monomeren werden Alkylester von (Meth)acrylsäure verstanden, die 1 bis 12 Kohlenstoffatome im Alkylrest aufweisen. Der Alkylrest kann linear, zyklisch und/oder verzweigt sein. Darüber hinaus kann er auch aromatische Reste aufweisen.

Der Begriff "(Meth)acrylsäure" umfasst im Rahmen der vorliegenden Erfindung sowohl Acrylsäure als auch Methacrylsäure.

Beispielsweise sind erfindungsgemäße Alkyl(meth)acrylat-Monomere ausgewählt aus der Gruppe bestehend aus Methyl(meth)acrylat, Ethyl(meth)acrylat, Propyl(meth)acrylat, n-Butyl(meth)acrylat, Isobutyl(meth)acrylat, 2-Ethylhexyl(meth)acrylat, Isopentyl(meth)acrylat, Stearyl(meth)acrylat, Benzyl(meth)acrylat oder Lauryl(meth)acrylat.

Bevorzugt als Alkyl(meth)acrylat-Monomere sind Methylmethacrylat, Ethylmethacrylat, Propylmethacrylat, n-Butylmethacrylat, Isobutylmethacrylat, Methylacrylat, n-Butylacrylat, Isopentylmethacrylat und Mischungen daraus.

Erfindungsgemäß bevorzugt ist daher auch ein Verfahren, bei dem das mindestens eine Alkyl(meth)acrylat-Monomer ausgewählt ist auch der Gruppe bestehend aus Methylmethacrylat, Ethylmethacrylat, Propylmethacrylat, n-Butylmethacrylat, Isobutylmethacrylat, Isopentylmethacrylat Methylacrylat, n-Butylacrylat und Mischungen daraus.

Der mindestens eine Polyester wird durch Polykondensation von Polycarbonsäuren mit Polyolen hergestellt. Dem Fachmann ist bekannt, dass bei der Polykondensation auch Derivate der Polycarbonsäuren, wie beispielsweise deren Niedrigalkylester und/oder deren Anhydride eingesetzt werden können.

Unter "Polycarbonsäuren" werden im Rahmen der vorliegenden Erfindung Verbindungen verstanden, die mindestens zwei Carboxylgruppen enthalten. Bevorzugt enthalten die bei der Polykondensation eingesetzten Polycarbonsäuren genau zwei Carboxylgruppen. Die Polycarbonsäuren werden dann auch als Dicarbonsäuren bezeichnet.

Als Polycarbonsäuren sind dem Fachmann bekannte Polycarbonsäuren geeignet, wie beispielsweise aliphatische Polycarbonsäuren, cycloaliphatische Polycarbonsäuren und/oder aromatische Polycarbonsäuren.

Geeignete Polycarbonsäuren sind beispielsweise ausgewählt aus der Gruppe bestehend aus Bernsteinsäure, Glutarsäure, Adipinsäure, Azelainsäure, Sebacinsäure, Dodecandisäure, Tetradecandisäure, Octadecandisäure, Cyclohexandicarbonsäure sowie deren Isomere, Benzoldicarbonsäure sowie deren Isomere und Trimellitsäure.

Der mindestens eine Polyester umfasst im Bereich von 0,1 bis 10 mol-%, bevorzugt im Bereich von 0,2 bis 5 mol-% und insbesondere bevorzugt im Bereich von 0,5 bis 1,5 mol-% Polycarbonsäureeinheiten mit C-C-Doppelbindung, bezogen auf die Gesamtstoffmenge an Polycarbonsäureeinheiten.

Zur Herstellung des Polyesters wird daher üblicherweise eine Mischung aus den vorstehend genannten Polycarbonsäuren und einer ungesättigten Polycarbonsäure eingesetzt. Unter einer ungesättigten Polycarbonsäure wird eine Polycarbonsäure verstanden, die mindestens eine C-C-Doppelbindung enthält. Die C-C-Doppelbindung kann beispielsweise im Rückgrat der Polycarbonsäure angeordnet sein. Derartige Polycarbonsäuren sind beispielsweise Fumarsäure, Maleinsäure und Mesaconsäure.

Darüber hinaus kann die C-C-Doppelbindung als Seitengruppe in der Polycarbonsäure angeordnet sein. Eine derartige Polycarbonsäure ist beispielsweise Itaconsäure.

Im Rahmen der vorliegenden Erfindung wird eine C-C-Doppelbindung, die als Seitengruppe in der Polycarbonsäure angeordnet ist und eine H₂C=C-Einheit umfasst, auch als Vinylgruppe bezeichnet.

Die C-C-Doppelbindung ist bevorzugt eine Vinylgruppe.

Erfindungsgemäß bevorzugt ist daher auch ein Verfahren, bei dem die in dem mindestens einen Polyester enthaltene C-C-Doppelbindung eine Vinylgruppe ist.

Weiterhin ist erfindungsgemäß bevorzugt, dass die Vinylgruppe in einer Itaconsäureeinheit vorliegt. Es ist daher bevorzugt, dass die Polycarbonsäureeinheiten mit C-C-Doppelbindung Itaconsäureeinheiten sind.

Es ist also erfindungsgemäß bevorzugt, dass der mindestens eine Polyester durch Polykondensation von Polycarbonsäuren und Polyolen hergestellt wird/erhältlich ist, wobei im Bereich von 0,1 bis 10 mol-%, bevorzugt im Bereich von 0,2 bis 5 mol-% und insbesondere bevorzugt im Bereich von 0,5 bis 1,5 mol-%, Itaconsäure bezogen auf die Gesamtstoffmenge an Polycarbonsäuren eingesetzt wird.

Unter Polyolen werden im Rahmen der vorliegenden Erfindung Verbindungen verstanden, die mindestens zwei Hydroxylgruppen enthalten. Bevorzugt enthalten die bei der Polykondensation eingesetzten Polyole genau zwei Hydroxylgruppen. Die Polyole werden dann auch als Diole bezeichnet.

Als Polyole sind dem Fachmann bekannte Polyole geeignet, wie beispielsweise aliphatische Polyole, aromatische Polyole und/oder Etherdiole. Aliphatische Polyole sind bevorzugt.

Geeignete Polyole sind beispielsweise ausgewählt aus der Gruppe bestehend aus Ethylenglycol, 1,2-Propandiol, 1,3-Propandiol, 1,4-Butandiol, 1,5-Pentandiol, 1,6-Hexandiol, 1,9-Nonandiol, 1,12-Dodecandiol, Neopentylglycol, 1,3-Butylethylpropandiol, 1,3-Methylpropandiol, Methylpentandiol, Cyclohexandimethanol, Trimethylolpropan, Pentaerythrol, Hydrochinon, Bisphenol A, Bisphenol F, Dihydroxynaphthalin, Etherdiole der vorstehend genannten und Mischungen daraus.

Verfahren zur Herstellung von Polyestern sind als solche bekannt. Beispielsweise können sie durch Polykondensation der Polyole mit den Polycarbonsäuren oder deren Estern, Anhydriden und/oder Säurechloriden in einer Inertgasatmosphäre bei Temperaturen von 100 °C bis 260 °C, vorzugsweise von 130 °C bis 240 °C, in der Schmelze oder in azeotroper Fahrweise gewonnen werden, wie es z.B. in Methoden der organischen Chemie (Houben-Weyl), Bd. 14/2, 1-5, 21-23, 40-22, Georg Thieme Verlag, Stuttgart, 1963, bei C. R. Martens, Alkyl Resins, 51-59, Reinhold Plastics Appl., Series, Reinhold Publishing Comp., New York, 1961 oder in DE 27 35 497 beschrieben ist.

Erfindungsgemäß umfasst der mindestens eine Polyester Polycarbonsäureeinheiten und Polyoleinheiten.

Im Rahmen der vorliegenden Erfindung werden unter Polycarbonsäureeinheiten Einheiten im Polyester, die von der Polycarbonsäure abgeleitet sind, verstanden. Im Rahmen der vorliegenden Erfindung werden unter Polyoleinheiten Einheiten im Polyester, die von dem Polyol abgeleitet sind, verstanden. Durch Kondensation des Polyols mit der Polycarbonsäure bilden sich Polyesterblöcke. Der darin von der Polycarbonsäure abgeleitete Block wird im Rahmen der vorliegenden Erfindung als Polycarbonsäureeinheit bezeichnet. Der darin vom Polyol abgeleitete Block wird im Rahmen der vorliegenden Erfindung als Polyoleinheit bezeichnet.

Bevorzugt sind die Polycarbonsäureeinheiten Dicarbonsäureeinheiten, die durch Kondensation einer Dicarbonsäure mit einem Polyol gebildet werden. Bevorzugt sind die Polyoleinheiten Dioleinheiten, die durch Kondensation eines Diols mit der Polycarbonsäure gebildet werden. Insbesondere bevorzugt sind die Polycarbonsäureeinheiten Dicarbonsäureeinheiten und die Polyoleinheiten Dioleinheiten. Sie werden durch Kondensation einer Dicarbonsäure mit einem Diol gebildet.

Beispielsweise weist der mindestens eine Polyester eine OH-Zahl (Hydroxylzahl) im Bereich von 5 mg(KOH)/g bis 150 mg(KOH)/g auf, bevorzugt im Bereich von 10 mg(KOH)/g bis 50 mg(KOH)/g.

Der mindestens eine Polyester weist beispielsweise eine Säurezahl von weniger als 10 mg(KOH)/g, bevorzugt von weniger als 5 mg(KOH)/g und insbesondere bevorzugt von weniger als 2 mg(KOH)/g auf.

Der mindestens eine Polyester hat beispielsweise ein zahlenmittleres Molekulargewicht (Mn) im Bereich von 700 bis 25.000 g/mol, bevorzugt im Bereich von 2.000 bis 12.000 g/mol, bestimmt mittels GPC oder HPLC jeweils mit PMMA als Standard.

In der ersten flüssigen Phase kann zudem mindestens ein Initiator bereitgestellt werden. Wird der mindestens eine Initiator in der ersten flüssigen Phase in Schritt a) bereitgestellt, so wird vorzugsweise in der weiter unten beschriebenen zweiten flüssigen Phase in Schritt b) kein Initiator bereitgestellt.

Im Rahmen der vorliegenden Erfindung bedeutet also "entweder in der ersten flüssigen Phase in Schritt a) oder in der zweiten flüssigen Phase in Schritt b) bereitgestellt", dass vorzugsweise der mindestens eine Initiator entweder nur in ersten flüssigen Phase in Schritt a) bereitgestellt wird, nicht aber in der zweiten flüssigen Phase in Schritt b) oder dass der mindestens eine Initiator nur in der zweiten flüssigen Phase in Schritt b) bereitgestellt wird, nicht aber in der ersten flüssigen Phase in Schritt a).

Es versteht sich von selbst, dass der mindestens eine Initiator zwar bevorzugt nur in der ersten flüssigen Phase oder nur in der zweiten flüssigen Phase bereitgestellt wird, dass der mindestens eine Initiator aber im Laufe des erfindungsgemäßen Verfahrens, insbesondere während zumindest einem der Schritte c) und d), von der ersten flüssigen Phase in die zweite flüssige Phase oder umgekehrt diffundieren kann.

Wird der mindestens eine Initiator in der ersten flüssigen Phase in Schritt a) bereitgestellt, so wird dieser üblicherweise ebenfalls in dem mindestens einen Alkyl(meth)acrylat-Monomer gelöst und liegt somit als in dem mindestens einen Alkyl(meth)acrylat-Monomer gelöster Initiator vor.

Beispielsweise werden im Bereich von 0,1 bis 20 Gew.-%, bevorzugt 0,5 bis 5 Gew.-% des mindestens einen Initiators in der ersten flüssigen Phase in Schritt a) bereitgestellt, bezogen auf das Gesamtgewicht der ersten flüssigen Phase.

Bevorzugt wird der mindestens eine Initiator in der zweiten flüssigen Phase in Schritt b) bereitgestellt. Es ist daher bevorzugt, dass die erste flüssige Phase ohne Initiator bereitgestellt wird.

In einer alternativen bevorzugten Ausführungsform wird der mindestens eine Initiator in der ersten flüssigen Phase in Schritt a) bereitgestellt. Es ist dann bevorzugt, dass die zweite flüssige Phase ohne Initiator bereitgestellt wird.

Als Initiator eignen sich alle dem Fachmann bekannten Verbindungen, die eine radikalische Polymerisation initiieren können. Beispielsweise ist der mindestens eine Initiator ausgewählt aus der Gruppe bestehend aus Peroxiden, Azoverbindungen, Persulfaten und Mischungen daraus. Bevorzugt ist der Initiator ausgewählt aus der Gruppe bestehend aus Peroxiden, Azoverbindungen und Mischungen daraus.

Bevorzugt ist daher auch ein Verfahren, bei dem der mindestens eine Initiator ausgewählt ist aus der Gruppe bestehend aus Peroxiden, Azoverbindungen und Mischungen daraus.

Geeignete Peroxide sind beispielsweise ausgewählt aus der Gruppe bestehend aus Wasserstoffperoxid, Dibenzoylperoxid, Dicyclohexylperoxodicarbonat, Dilaurylperoxid, Methylethylketonperoxid, Acetylacetonperoxid, Di-tert.-butylperoxid, tert.-Butylhydroperoxid, Cumolhydroperoxid, tert.-Butylperoctanoat, tert.-Butylper-2-ethylhexanoat, tert.-Butylperneodecanoat, tert.-Amylperpivalat, tert.-Butylperpivalat, tert.-Butylperbenzoat, Di(tert-amyl)peroxid (DTAP), tert-Butylperoxy-(2-ethylhexyl)carbonat (TBPEHC), tert.-Butylper-2-ethylhexanoat, Dicumylperoxid, Diisopropylperoxidicarbonat und Bis(4-t-butylcyclohexyl)peroxidicarbonat.

Geeignete Azoverbindungen sind beispielsweise ausgewählt aus der Gruppe bestehend aus 2,2-Azobisiso-2,4-dimethylvaleronitril, 2,2-Azobisisobutyro-nitril, 2,2'-Azo-bis(2-amidinopropan)dihydrochlorid, 2-(Carbamoylazo)isobutyronitril und 4,4'-Azobis(cyanovaleriansäure).

Geeignete Persulfate sind beispielsweise ausgewählt aus der Gruppe bestehend aus Lithiumperoxodisulfat, Natriumperoxodisulfat, Kaliumperoxodisulfat und Ammoniumperoxodisulfat.

Darüber hinaus kann die erste flüssige Phase zusätzlich ein weiteres Comonomer enthalten. Unter einem "weiteren Comonomer" wird im Rahmen der vorliegenden Erfindung ein Monomer verstanden, das mit dem mindestens einen Alkyl(meth)acrylat-Monomer copolymerisierbar ist. Es versteht sich von selbst, dass das weitere Comonomer von dem mindestens einen Alkyl(meth)acrylat-Monomer verschieden ist. "Ein weiteres Comonomer" bedeutet im Rahmen der vorliegenden Erfindung sowohl genau ein weiteres Comonomer als auch eine Mischung aus zwei oder mehreren Comonomeren.

Derartige weitere Comonomere sind dem Fachmann als solche bekannt und beispielsweise (Meth)acrylsäure, Hydroxyethylmethacrylat und/oder Hydroxypropylmethacrylat.

Beispielsweise enthält die erste flüssige Phase im Bereich von 0 bis 20 Gew.-%, bevorzugt im Bereich von 0 bis 10 Gew.-% des weiteren Comonomers, bezogen auf das Gesamtgewicht der ersten flüssigen Phase.

In einer Ausführungsform der Erfindung enthält die erste flüssige Phase kein weiteres Comonomer.

Es ist insbesondere bevorzugt, dass die erste flüssige Phase kein Styrol enthält.

In Schritt b) wird eine zweite flüssige Phase, die Wasser und mindestens ein darin dispergiertes Suspensionshilfsmittel enthält, bereitgestellt.

Beispielsweise kann die zweite flüssige Phase bereitgestellt werden, indem das Suspensionshilfsmittel unter Rühren in Wasser dispergiert wird.

Die zweite flüssige Phase in Schritt b) kann bei beliebiger Temperatur bereitgestellt werden, vorzugsweise wird sie bei einer Temperatur im Bereich von 25 °C bis 80 °C, bevorzugt im Bereich von 37 °C bis 65 °C bereitgestellt.

In der zweiten flüssigen Phase bildet Wasser üblicherweise die kontinuierliche Phase; das Suspensionshilfsmittel bildet die disperse Phase. Üblicherweise liegt die zweite flüssige Phase als Suspension vor. Das Suspensionshilfsmittel liegt als feste Teilchen im Wasser vor.

Als Suspensionshilfsmittel eignen sich alle dem Fachmann bekannten Suspensionshilfsmittel, wie beispielsweisen Polyacrylsäuren, Salze von Polyacrylsäuren und/oder Pickering Systeme. Geeignete Pickering Systeme sind beispielsweise kolloidales Siliciumdixoid und/oder Aluminiumhydroxid. Ein Pickering System aus Aluminiumhydroxid ist vorzugsweise hergestellt aus Aluminiumsulfat und Natriumcarbonat (Soda).

Bevorzugt ist das Suspensionshilfsmittel ausgewählt aus der Gruppe bestehend aus Polyacrylsäuren, Salzen von Polyacrylsäuren und Pickering Systemen aus Aluminiumhydroxid.

Bevorzugt ist daher ein Verfahren, bei dem das in der zweiten flüssigen Phase enthaltene mindestens eine Suspensionshilfsmittel ausgewählt ist aus der Gruppe bestehend aus Polyacrylsäuren, Salzen von Polyacrylsäuren und Pickering Systemen aus Aluminiumhydroxid. Beispielsweise enthält die zweite flüssige Phase im Bereich von 0,01 bis 10 Gew.-%, bevorzugt im Bereich von 0,02 bis 5 Gew.-% Suspensionshilfsmittel, bezogen auf das Gesamtgewicht der zweiten flüssigen Phase.

Dementsprechend enthält die zweite flüssige Phase beispielsweise im Bereich von 90 bis 99,99 Gew.-%, bevorzugt im Bereich von 95 bis 99,98 Gew.-% Wasser, bezogen auf das Gesamtgewicht der zweiten flüssigen Phase.

Der mindestens eine Initiator kann in der zweiten flüssigen Phase in Schritt b) bereitgestellt werden. Wird der Initiator in der zweiten flüssige Phase in Schritt b) bereitgestellt, so gelten für ihn die gleichen Ausführungen und Bevorzugungen wie vorstehend für den in der ersten flüssigen Phase in Schritt a) bereitgestellten Initiator.

Beispielsweise werden im Bereich von 0,1 bis 20 Gew.-%, bevorzugt im Bereich von 0,2 bis 10 Gew.-% Initiator in der zweiten flüssigen Phase in Schritt b) bereitgestellt, bezogen auf das Gesamtgewicht der zweiten flüssigen Phase.

In Schritt c) wird die erste flüssige Phase in der zweiten flüssigen Phase dispergiert, wobei sich Tropfen der ersten flüssigen Phase in der zweiten flüssigen Phase bilden.

Die erste flüssige Phase ist üblicherweise im Wesentlichen unlöslich in der zweiten flüssigen Phase.

Das Dispergieren in Schritt c) erfolgt üblicherweise unter Rühren. Es bilden sich Tropfen der ersten flüssigen Phase in der zweiten flüssigen Phase. Die Tropfen enthalten das Alkyl(meth)acrylat-Monomer und den darin gelösten Polyester, sowie gegebenenfalls das weitere Comonomer. Die Tropfen enthalten zudem den mindestens einen Initiator, entweder durch die Bereitstellung des Initiators in der ersten flüssigen Phase oder durch Diffusion des Initiators von der zweiten flüssigen Phase in die erste flüssige Phase.

Das in der zweiten flüssigen Phase enthaltene Suspensionshilfsmittel umschließt üblicherweise die Tropfen der ersten flüssigen Phase und bildet so eine Grenzschicht zwischen der ersten flüssigen Phase und der zweiten flüssigen Phase. Dadurch stabilisiert das Suspensionshilfsmittel die Tropfen der ersten flüssigen Phase in der zweiten flüssigen Phase.

Üblicherweise bilden die erste flüssige Phase und die zweite flüssige Phase eine Emulsion. Die erste flüssige Phase bildet darin die disperse Phase während die zweite flüssige Phase die kontinuierliche Phase bildet.

Die in Schritt c) erhaltenen Tropfen der ersten flüssigen Phase in der zweiten flüssigen Phase weisen beispielsweise einen mittleren Durchmesser d₅₀ nach Coulter im Bereich von 0,01 mm bis 5 mm auf, bevorzugt im Bereich von 0,05 mm bis 0,40 mm.

Bevorzugt ist daher auch ein Verfahren, bei dem die in Schritt c) erhaltenen Tropfen der ersten flüssigen Phase einen mittleren Durchmesser d₅₀ nach Coulter im Bereich von 0,01 mm bis 5 mm aufweisen.

Das Gewichtsverhältnis der ersten flüssigen Phase zur zweiten flüssigen Phase in Schritt c) liegt beispielsweise im Bereich von 1 : 2 bis 2 : 1, bevorzugt bei etwa 1 : 1.

Bevorzugt ist daher auch ein Verfahren, bei dem das Gewichtsverhältnis der ersten flüssigen Phase zur zweiten flüssigen Phase beim Dispergieren in Schritt c) im Bereich von 1 : 2 bis 2 : 1 liegt.

Das Dispergieren in Schritt c) findet üblicherweise bei einer Temperatur unterhalb der Temperatur statt, bei der das in der ersten flüssigen Phase enthaltene Alkyl(meth)acrylat-Monomer und/oder der Polyester polymerisieren. Beispielsweise findet das Dispergieren in Schritt c) bei einer Temperatur im Bereich von 20 °C bis < 50 °C statt, bevorzugt im Bereich von 35 °C bis 45 °C.

In Schritt d) werden das in der ersten flüssigen Phase enthaltene Alkyl(meth)acrylat-Monomer und der Polyester, sowie gegebenenfalls das weitere Comonomer polymerisiert unter Erhalt der Polymermischung, die das Alkyl(meth)acrylat-Polyester-Copolymer enthält.

Üblicherweise erfolgt die Polymerisation unter Rühren.

Die Polymerisation in Schritt d) wird üblicherweise durch den Initiator gestartet. Beispielsweise bildet der Initiator durch Aktivierung mittels Licht und/oder bei erhöhten Temperaturen, beispielsweise im Bereich von 50 °C bis 100 °C, bevorzugt im Bereich von 65 °C bis 85 °C, Radikale. Diese Radikale initiieren die Radikalbildung an der C-C-Doppelbindungen des Alkyl(meth)acrylat-Monomers und/oder an der C-C-Doppelbindung des Polyesters. Diese Reaktionen sind als solche bekannt.

Die Polymerisation in Schritt d) erfolgt beispielsweise bei einer Temperatur im Bereich von 50 °C bis 100 °C, bevorzugt im Bereich von 65 °C bis 85 °C.

Bevorzugt ist daher auch ein Verfahren, bei dem die Polymerisation in Schritt d) bei einer Temperatur im Bereich von 50 °C bis 100 °C stattfindet.

Die Polymermischung wird in Schritt d) üblicherweise als Feststoff in der zweiten flüssigen Phase dispergiert erhalten. Die in Schritt d) erhaltene Polymermischung ist üblicherweise in der zweiten flüssigen Phase im Wesentlichen unlöslich.

Die zweite flüssige Phase bildet dann zusammen mit der Polymermischung eine Suspension. Die zweite flüssige Phase bildet die kontinuierliche Phase, während die Polymermischung die disperse Phase bildet.

In Schritt d) wird die Polymermischung, die das Alkyl(meth)acrylat-Polyester-Copolymer enthält, erhalten.

Bei der Polymerisation in Schritt d) polymerisiert das mindestens eine Alkyl(meth)acrylat-Monomer mit dem Polyester. Bei dieser Reaktion bildet sich üblicherweise das Alkyl(meth)acrylat-PolyesterCopolymer. Bei der Polymerisation bildet sich durch den Initiator an der C-C-Doppelbindung der Polycarbonsäureeinheiten des Polyesters und/oder an der C-C-Doppelbindung der Alkyl(meth)acrylat-Monomere Radikale. Diese können miteinander reagieren und/oder die Bildung weiterer Radikale initiieren wodurch die Polymerisation erfolgt. Diese Reaktion ist als solche bekannt.

Dadurch kann sich beispielsweise ein Pfropfcopolymer bilden, das das Alkyl(meth)acrylat-Monomer oder dessen Polymere, gegebenenfalls mit dem weiteren Comonomer, auf den Polyester oder dessen Copolymere aufgepfropft enthält. Es bilden sich dann Polyester-Hauptketten und Polyalkyl(meth)acrylat-Seitenketten. Im Rahmen der vorliegenden Erfindung umfasst der Begriff "Alkyl(meth)acrylat-Polyester-Copolymer" also auch derartige Pfropfcopolymere.

Alternativ oder zusätzlich ist es möglich, dass Block-Copolymere gebildet werden, die einen Block aus Alkyl(meth)acrylat-Polymeren, gegebenenfalls mit weiteren Comonomeren, und einen Block aus dem Polyester oder dessen Copolymeren enthalten. Im Rahmen der vorliegende Erfindung umfasst der Begriff "Alkyl(meth)acrylat-Polyester-Copolymer" also auch derartige Block-Copolymere.

Die Polymermischung enthält beispielsweise im Bereich von 5 bis 95 Gew.-%, bevorzugt im Bereich von 10 bis 50 Gew.-% und insbesondere bevorzugt im Bereich von 20 bis 30 Gew.-% des Alkyl(meth)acrylat-Polyester-Copolymers, bezogen auf das Gesamtgewicht der Polymermischung.

Bei der Polymerisation in Schritt d) polymerisiert üblicherweise auch der Polyester mit sich selbst, unter Erhalt mindestens eines Copolyesters. Ebenso kann das mindestens eine Alkyl(meth)acrylat-Monomer mit sich selbst und gegebenenfalls dem weiteren Comonomer, polymerisieren, unter Erhalt mindestens eines Alkyl(meth)acrylat-Polymers.

Daher enthält die in Schritt d) erhaltene Polymermischung neben dem Alkyl(meth)acrylat-Polyester-Copolymer üblicherweise noch weitere Polymere, insbesondere enthält sie üblicherweise noch mindestens einen Copolyester und/oder mindestens ein Alkyl(meth)acrylat-Polymer.

Darüber hinaus ist es möglich, dass Teile des Polyesters und/oder Teile der Alkyl(meth)acrylatMonomere nicht reagieren und in der Polymermischung enthalten sind.

Alkyl(meth)acrylat-Monomere, sowie gegebenenfalls die weiteren Comonomere, lassen sich üblicherweise mittels Trocknung aus der Polymermischung weitestgehend entfernen.

Bevorzugt ist daher auch ein Verfahren, bei dem die Polymermischung zusätzlich den mindestens einen Polyester, mindestens einen Copolyester und/oder mindestens ein Alkyl(meth)acrylatPolymer enthält. Bevorzugt enthält sie zusätzlich mindestens einen Polyester, mindestens einen Copolyester und mindestens ein Alkyl(meth)acrylat-Polymer.

Die Gesamtmenge an Polyester und Copolyester in der Polymermischung liegt beispielsweise im Bereich von 0,01 bis 15 Gew.-%, bevorzugt im Bereich von 0,01 bis 5 Gew.-% und insbesondere bevorzugt im Bereich von 0,01 bis 2 Gew.-%, jeweils bezogen auf das Gesamtgewicht der Polymermischung.

Die Polymermischung enthält beispielsweise im Bereich von 5 bis 95 Gew.-%, bevorzugt im Bereich von 50 bis 90 Gew.-% und insbesondere bevorzugt im Bereich von 70 bis 80 Gew.-% mindestens eines Alkyl(meth)acrylat-Polymers, jeweils bezogen auf das Gesamtgewicht der Polymermischung.

Im Anschluss an Schritt d) wird die Polymermischung üblicherweise von der zweiten flüssigen Phase abgetrennt. Die Abtrennung kann nach allen dem Fachmann bekannten Methoden erfolgen, beispielsweise mittels Filtration und anschließender Trocknung. Dabei kann die Filtration mittels kontinuierlich betriebener Dekanter und Zentrifugen und die Trocknung durch kontinuierlich betriebener Wirbelschicht oder Fließbetttrockner erfolgen.

Bevorzugt ist daher auch ein Verfahren, bei dem die in Schritt d) erhaltene Polymermischung im Anschluss an Schritt d) getrocknet wird.

Nach der Trocknung ist die erhaltene Polymermischung üblicherweise im Wesentlichen frei von Wasser. Beispielsweise enthält die Polymermischung höchstens 5 Gew.-%, bevorzugt höchstens 1 Gew.-% Wasser, bezogen auf das Gesamtgewicht der Polymermischung.

Die Polymermischung wird in Schritt d) üblicherweise in Form von Polymer-Perlen erhalten. Diese haben bevorzugt einen mittleren Durchmesser d50, bestimmt nach Coulter, im Bereich von 0,01 bis 0,6 mm.

Die Polymermischung weist beispielsweise eine Glasübergangstemperatur Tg im Bereich von 50 °C bis 70 °C auf, bestimmt mittels Differenzthermoanalyse (Differential Scanning Calorimetry, DSC) nach DIN EN ISO 11357-4.

Erfindungsgemäß bevorzugt findet das erfindungsgemäße Verfahren in Abwesenheit von Styrol statt. Insbesondere ist es bevorzugt, dass in keinem der Schritte a) bis d) Styrol eingesetzt wird.

Die Schritte a) bis d) des erfindungsgemäßen Verfahrens können in der angegebenen Reihenfolge durchgeführt werden. Darüber hinaus ist auch eine andere Reihenfolge möglich. Es können auch Schritte gleichzeitig durchgeführt werden. Beispielsweise kann die Reihenfolge der Schritte a) und b) vertauscht werden und/oder die Schritte a) und b) können zeitgleich durchgeführt werden. Darüber hinaus können zusätzliche Schritte durchgeführt werden.

Gegenstand der vorliegenden Erfindung ist auch eine Polymermischung erhältlich nach dem erfindungsgemäßen Verfahren.

Für die Polymermischung gelten die zuvor beschriebenen Ausführungen und Bevorzugungen.

Die erfindungsgemäße Polymermischung ist insbesondere geeignet als Bindemittel in Druckfarben. Darüber hinaus eignet sich die erfindungsgemäße Polymermischung als Heißsiegellack. Generell kann die erfindungsgemäße Polymermischung als Phasenvermittler in sämtlichen Anwendungen, in denen Poly(meth)acrylat-Polyester-Mischungen in einem Lösungsmittel gelöst werden sollen, eingesetzt werden.

Gegenstand der vorliegenden Erfindung ist daher auch die Verwendung der erfindungsgemäßen Polymermischung als Bindemittel in Druckfarben.

Nachfolgend wird die Erfindung anhand von Beispielen näher erläutert.

### Beispiele

### Herstellung einer Polvmermischunq mittels Suspensionspolymerisation

Die Suspensionspolymerisation wurde in einem mit Rückflusskühler ausgestatteten 5 l (Liter) HWS-Glas-Reaktor mit Doppelmantel unter Stickstoffatmosphäre durchgeführt. Der Reaktor war mit einem Inter-MIG-Rührer mit 4 Rührflügeln (Flügelbreite: 115 mm oder 95 mm, Abstand zwischen den Flügeln: 110 mm, Rührerdrehzahl 300 Upm) ausgestattet. Der Reaktor umfasste weiterhin vier Stromstörer.

Die Polymerisation wurde dann gemäß der folgenden Schritte a) bis e) durchgeführt.

### a) Bereitstellen einer ersten flüssigen Phase

Die erste flüssige Phase wurde mit den in Tabelle 1 angegebenen Komponenten bereitgestellt und unter Rühren für drei bis fünf Minuten homogenisiert.

### b) Bereitstellen einer zweite flüssigen Phase

Die zweite flüssige Phase wurde mit den in Tabelle 1 angegebenen Komponenten ohne den Initiator bereitgestellt und unter Rühren drei bis fünf Minuten homogenisiert.

Der Initiator wurde separat eingewogen und in den Reaktor überführt. Anschließend wurde die zweite flüssige Phase zugegeben und auf die vorgegebene Manteltemperatur aufgeheizt. Die zweite flüssige Phase wurde bei 400 mbar 10 min entgast.

### c) Dispergieren der ersten flüssigen Phase in der zweiten flüssigen Phase

Bei einer Temperatur von etwa 40 °C wurde die zweite flüssige Phase bei ca. 800 mbar innerhalb von 20 min unter Rühren in den Reaktor mit der ersten flüssigen Phase eingebracht.

### c1) Entgasung und Aufheizen

Die erhaltene Dispersion wurde bei ca. 400 mbar 20 min lang entgast werden und auf Polymerisationstemperatur aufgeheizt.

### d) Polymerisation

Die in der ersten flüssigen Phase enthaltenen Komponenten wurden bei der in Tabelle 1 angegebenen Temperatur polymerisiert. Das Ende der Polymerisation wird an der deutlich erhöhten Wärmeabführung (Tmax) sichtbar. Es wurde ein Umsatz von > 90 % erreicht. Die Polymerisationszeit ist die Zeit von Erreichen der Polymerisationstemperatur bis zum Erreichen des Temperaturmaximums.

Anschließend wurde der Ansatz entsprechend den in Tabelle 1 angegebenen Werten für Zeit und Temperatur nachgeheizt. Nach der Nachheizphase wird der Ansatz abgekühlt.

### e) Abtrennung

Nach Abkühlung der erhaltenen Perlsuspension auf ca. 30 °C Innentemperatur wurde die Mutterlauge von den Polymer-Perlen durch Filtration abgetrennt und anschließend getrocknet. Die erhaltenen Polymer-Perlen wurden mit einem Sieb mit der Maschenweite 1000 µm gesiebt. Durch das erfindungsgemäße verfahren lassen sich Polymermischungen mittels Suspensionspolymerisation mit hohe Ausbeuten herstellen. Besonders vorteilhaft ist das Verhältnis der ersten Phase zur zweiten Phase von 1 :2 bzw. 1 : 1, woraus sehr gute Raum-Zeit-Ausbeuten erzielt werden.

### Auswertung

### 1. Bestimmung der Anbackungen

Die lose am Rührer und Stromstörer haftenden Anbackungen wurden mit Wasser abgespült und deren Menge (Gewicht) bestimmt.

### 2. Visuelle Beurteilung der Perlen

Die Perlen wurden mittels Mikroskop visuell beurteilt.

### 3. Beurteilung der Mutterlauge

Der pH-Wert der bei der Filtration erhaltenen Mutterlauge wurde mit einem pH-Meter bestimmt.

### 4. Analytik

Folgende analytischen Untersuchungen wurden durchgeführt:
a) Partikelgrößenverteilung gemessen nach dem Coulter-Verfahren.
b) Restgehalt Monomer (vergleichende HPLC)
c) Restgehalt Regler (vergleichende HPLC)
d) Restgehalt Initiator (vergleichende HPLC)
e) Viskositätszahl, VZ (reduzierte Viskosität) gemessen mit Ubbelohde Kapillarviskosimeter Typ 0c entsprechend ISO/DIN 3105. DIN 51562, 4-schenklig
f) gewichtsmittleres Molekulargewicht, Mw, GPC gegen PMMA als Standard

Die Ergebnisse der Auswertungen sind in Tabellen 1 zu finden.

**Tabelle 1:**

| **Beschreibung** | | **Komponente** | **Beispiel 1** | **Beispiel 2** |
|---|---|---|---|---|
| | | | | |
| Verhältnis erste flüssige Phase : zweite flüssige Phase | | Monomer-Wasserverhältnis | 1 : 2 | 1 : 1 |
| erste flüssige Phase | | | | |
| | Gesamtmenge Alkyl(meth)acrylat-Monomer und Polyester [g] | Monomergesamtmenge | 1600 | 2400 |
| | Alkyl(meth)acrylat-Monomer [% von Gesamtmenge] | MMA | 59,0 | 59,0 |
| | Alkyl(meth)acrylat-Monomer [% von Gesamtmenge] | n-BuMA | 38,0 | 38,0 |
| | Polyester [% von Gesamtmenge] | Polyester | 3 | 3 |
| | Molekulargewichtsregler [% bezogen auf Gesamtmenge an Alkyl(meth)acrylat und Polyester] | Ethylhexyl-thioglycolat (TGEH) | 1,4 | 1 |
| | Initiator [% bezogen auf Gesamtmenge an Alkyl(meth)acrylat und Polyester] | Dilauroylperoxid (LPO) | 0,5 | 1 |
| zweite flüssige Phase [g] | | | 3271 | 2401 |
| | Wasser [g] | Wasser | 3162 | 2340 |
| | Suspensionshilfsmittel [g] | Polyacrylsäure 13 %ig in Wasser | 99,11 | 60,52 |
| | Additiv [g] | Kaliumhydrogensulfat | 0,63 | 0,47 |
| | Additiv [g] | Mowiol | 10 | 15 |
| | pH-Wert | | 2,85 | 2,92 |
| | Entgasen nach der Monodosierung Zeit in Minuten/mbar | | 20 / 370 | 20 / 350 |
| | | | | |
| Dosierzeit erste flüssige Phase [min] | | | 25 | 22 |
| Temperatur bei Zugabe der ersten flüssigen Phase [°C] | | | 37 - 40 | 37 - 40 |
| Polymerisationstemperatur [°C] | | | 76 | 76 |
| Aufheizzeit bis zur Polymerisationstemperatur [min] | | | 40 | 35 |
| Zeit bis maximale Temperatur [min] | | | 102 | 105 |
| Nachheiztemperatur [°C] | | | 87 | 87 |
| Nachheizzeit [min] | | | 60 | 60 |
| Tmax in Reaktor [°C] | | | 76,2 | 77,6 |
| Tmax in Mantel [°C] | | | 71,8 | 67,6 |
| | | | | |
| Anback. Rührer + Stromst. [g] | | | 25,7 | 24,1 |
| | | | | |
| Alkyl(meth)acrylat-Polyester Copolymer [g] | | | 1544 | 2370 |
| abgesiebtes Grobgut [g] | | | 11,8 | 6,8 |
| Rest Monomere MMA / n-BuMA [%] | | | 0,15/0,05 | 0,11/0,04 |
| Rest Initiator [ppm] | | | 100 | 110 |
| d50' Coulter [µm] | | | 250 | 230 |
| pH - Mutterlauge | | | 3,1 | 3,2 |
| Viskositätszahl [ml/g] | | | 16 | 22 |
| SEC (Mw/D) [g/mol] | | | 26450 / 4,03 | 36600 / 2,30 |
| Pfropfungsgrad (gepfropft/ungepfropft) [%] | | | 27/73 | 29/70 |

Die in Beispiel 1 und 2 erhaltenen Polymerperlen sowie das Polymer gemäß Vergleichsbeispiel 3 (DEGALAN^{®} 1040 L (Firma Röhm GmbH; Copolymer aus Polyester und (Meth)Acrylat 50 %ig in n--Propylacetat)) wurden verschiedenen Tests unterzogen. Folgende Schritte wurden durchgeführt:
1 Die in Beispiel 1 und 2 erhaltenen Polymer-Perlen bzw. DEGALAN 1040 L wurden mit Ethylacetat verdünnt auf 30 Gew.-% Festkörper. Die erhaltene Lösung wurde visuell beurteilt.
2. Formulierung CAP-Lack: 14 Gew.-% Celluloseacetatpropionat (CAP 504.02, Firma Eastman) wurden mit 28 Gew.-% Ethylacetat und 53 Gew.-% Ethanol gemischt und auf einer Rollbank gelöst. 52 Gew.-% dieser Lösung wurden mit 4 Gew.-% Di(phenoxyethyl)formal (Desavin, Firma Covestro), 15,5 Gew.-% Ethanol, 8,5 Gew.-% Ethylacetat und 20 Gew.-% Monolite Blau 515303 (Heubach/Heucotech, Ltd.) dispergiert.
3. 5 g Polymer-Perlen bzw. DEGALAN 1040 L wurden mit 15 g des unter 2. hergestellten CAP-Lacks gemischt.
4. Zur Bestimmung der Viskosität des unter 3. erhaltenen Lacks wurde ein Rheostress-Viskosimeter (100 s⁻¹, PP35, 100 sec, 23 °C) verwendet.
5. Die CAP-Lösung wurde auf einen PET-Film mit Spiralrakel Nr. 1 (6 µm Nassschichtdicke) aufgebracht und mit einem Föhn getrocknet.
6. Das Klebeband Scapa 1112 wurde über die Länge der Druckfarbe aufgebracht und anschließend in einem Winkel von 45° ruckartig abgezogen.

**Tabelle 2**

| Schritt | Beispiel 1 | Beispiel 2 | Vergleichsbeispiel 3 |
|---|---|---|---|
| 1. visuelle Beurteilung der Lösung 0 bis 5, 1-5/5 | trüb, 1/5 | klar, 0/5 | klar, 0/5 |
| 0 = klar, 5 = undurchsichtig | | | |
| 4. Viskosität [mPas] | 65 | 60 | 60 |
| 6. Tape-Test [Ablösung in %] | 2 | 1 | 1 |

Wie anhand der Tabelle 2 zu erkennen, weisen die erfindungsgemäß hergestellten Polymermischungen (Beispiel 1 und 2) vergleichbare Eigenschaften auf, wie nach bekannten Verfahren hergestellte Polymermischungen (Vergleichsbeispiel 3). Die leichte Trübung bei Beispiel 1 lässt sich durch einfache Filtration beseitigen. Die Viskositäten sind ebenso vergleichbar, wie die Haftung auf PET-Folie. Auch Lösungen lassen sich mit den erfindungsgemäßen Polymermischungen gut herstellen.

## Patentansprüche

1. Verfahren zur Herstellung einer Polymermischung, die ein Alkyl(meth)acrylat-PolyesterCopolymer enthält, umfassend die Schritte:
a) Bereitstellen einer ersten flüssigen Phase, die mindestens ein Alkyl(meth)acrylat-Monomer und mindestens einen in dem Alkyl(meth)acrylat-Monomer gelösten Polyester enthält,
b) Bereitstellen einer zweiten flüssigen Phase, die Wasser und mindestens ein darin dispergiertes Suspensionshilfsmittel enthält,
c) Dispergieren der ersten flüssigen Phase in der zweiten flüssigen Phase, wobei sich Tropfen der ersten flüssigen Phase in der zweiten flüssigen Phase bilden,
d) Polymerisation des in der ersten flüssigen Phase enthaltenen mindestens einen Alkyl(meth)acrylat-Monomers und des mindestens einen Polyesters unter Erhalt der Polymermischung, die das Alkyl(meth)acrylat-Polyester-Copolymer enthält,
wobei die Polymerisation in Schritt d) initiiert wird durch mindestens einen Initiator, der entweder in der ersten flüssigen Phase in Schritt a) oder in der zweiten flüssigen Phase in Schritt b) bereitgestellt wird, **dadurch gekennzeichnet, dass**
der mindestens eine Polyester Polycarbonsäureeinheiten und Polyoleinheiten umfasst, wobei der mindestens eine Polyester im Bereich von 0,1 bis 10 mol-% Polycarbonsäureeinheiten mit C-C-Doppelbindung umfasst, bezogen auf die Gesamtstoffmenge an Polycarbonsäureeinheiten.

2. Verfahren gemäß Anspruch 1, **dadurch gekennzeichnet, dass** die erste flüssige Phase im Bereich von 0,1 bis 15 Gew.-% des mindestens einen Polyesters enthält, bezogen auf das Gesamtgewicht der ersten flüssigen Phase.

3. Verfahren gemäß Anspruch 1 oder 2, **dadurch gekennzeichnet, dass** die in dem mindestens einen Polyester enthaltene C-C-Doppelbindung eine Vinylgruppe ist.

4. Verfahren gemäß einem der Ansprüche 1 bis 3, **dadurch gekennzeichnet, dass** das mindestens eine Alkyl(meth)acrylat-Monomer ausgewählt ist auch der Gruppe bestehend aus Methylmethacrylat, Ethylmethacrylat, Propylmethacrylat, n-Butylmethacrylat, Isobutylmethacrylat, Isopentylmethacrylat, Methylacrylat, n-Butylacrylat und Mischungen daraus.

5. Verfahren gemäß einem der Ansprüche 1 bis 4, **dadurch gekennzeichnet, dass** der mindestens eine Initiator ausgewählt ist aus der Gruppe bestehend aus Peroxiden, Azoverbindungen und Mischungen daraus.

6. Verfahren gemäß einem der Ansprüche 1 bis 5, **dadurch gekennzeichnet, dass** das in der zweiten flüssigen Phase enthaltene mindestens eine Suspensionshilfsmittel ausgewählt ist aus der Gruppe bestehend aus Polyacrylsäuren, Salzen von Polyacrylsäuren und Pickering Systemen aus Aluminiumhydroxid.

7. Verfahren gemäß einem der Ansprüche 1 bis 6, **dadurch gekennzeichnet, dass** das Gewichtsverhältnis der ersten flüssigen Phase zur zweiten flüssigen Phase beim Dispergieren in Schritt c) im Bereich von 1 : 2 bis 2 : 1 liegt.

8. Verfahren gemäß einem der Ansprüche 1 bis 7, **dadurch gekennzeichnet, dass** die in Schritt c) erhaltenen Tropfen der ersten flüssigen Phase einen Durchmesser im Bereich von 0,01 mm bis 5 mm aufweisen.

9. Verfahren gemäß einem der Ansprüche 1 bis 8, **dadurch gekennzeichnet, dass** die Polymerisation in Schritt d) bei einer Temperatur im Bereich von 50 °C bis 100 °C stattfindet.

10. Verfahren gemäß einem der Ansprüche 1 bis 9, **dadurch gekennzeichnet, dass** die in Schritt d) erhaltene Polymermischung im Anschluss an Schritt d) getrocknet wird.

11. Polymermischung erhältlich nach einem Verfahren gemäß einem der Ansprüche 1 bis 10.

12. Verwendung einer Polymermischung gemäß Anspruch 11 als Bindemittel in Druckfarben.

## Claims

1. Process for producing a polymer mixture that comprises an alkyl (meth)acrylate-polyester copolymer, comprising the steps of:
a) providing a first liquid phase comprising at least one alkyl (meth)acrylate monomer and at least one polyester dissolved in the alkyl (meth)acrylate monomer,
b) providing a second liquid phase comprising water and at least one suspension aid dispersed therein,
c) dispersing the first liquid phase in the second liquid phase, wherein droplets of the first liquid phase form in the second liquid phase,
d) polymerizing the at least one alkyl (meth)acrylate monomer present in the first liquid phase and the at least one polyester to obtain the polymer mixture comprising the alkyl (meth)acrylate-polyester copolymer,
wherein the polymerization in step d) is initiated by at least one initiator that is provided either in the first liquid phase in step a) or in the second liquid phase in step b), **characterized in that**
the at least one polyester includes polycarboxylic acid units and polyol units, wherein the at least one polyester includes in the range from 0.1 to 10 mol% of polycarboxylic acid units having a C-C double bond, based on the total amount of polycarboxylic acid units.

2. Process according to Claim 1, **characterized in that** the first liquid phase comprises in the range from 0.1% to 15% by weight of the at least one polyester, based on the total weight of the first liquid phase.

3. Process according to Claim 1 or 2, **characterized in that** the C-C double bond present in the at least one polyester is a vinyl group.

4. Process according to any of Claims 1 to 3, **characterized in that** the at least one alkyl (meth)acrylate monomer is also selected from the group consisting of methyl methacrylate, ethyl methacrylate, propyl methacrylate, n-butyl methacrylate, isobutyl methacrylate, isopentyl methacrylate, methyl acrylate, n-butyl acrylate, and mixtures thereof.

5. Process according to any of Claims 1 to 4, **characterized in that** the at least one initiator is selected from the group consisting of peroxides, azo compounds, and mixtures thereof.

6. Process according to any of Claims 1 to 5, **characterized in that** the at least one suspension aid present in the second liquid phase is selected from the group consisting of polyacrylic acids, salts of polyacrylic acids, and aluminum hydroxide Pickering systems.

7. Process according to any of Claims 1 to 6, **characterized in that** the weight ratio of the first liquid phase to the second liquid phase during dispersion in step c) is in the range from 1:2 to 2:1.

8. Process according to any of Claims 1 to 7, **characterized in that** the droplets of the first liquid phase obtained in step c) have a diameter in the range from 0.01 mm to 5 mm.

9. Process according to any of Claims 1 to 8, **characterized in that** the polymerization in step d) takes place at a temperature in the range from 50°C to 100°C.

10. Process according to any of Claims 1 to 9, **characterized in that** the polymer mixture obtained in step d) is dried following step d).

11. Polymer mixture obtainable by a process according to any of Claims 1 to 10.

12. Use of a polymer mixture according to Claim 11 as a binder in printing inks.

## Revendications

1. Procédé de fabrication d'un mélange de polymères contenant un copolymère (méth)acrylate d'alkyle-polyester, comprenant les étapes suivantes :
a) fourniture d'une première phase liquide, qui contient au moins un (méth)acrylate d'alkyle monomère et au moins un polyester dissous dans le (méth)acrylate d'alkyle monomère,
b) fourniture d'une deuxième phase liquide, qui contient de l'eau et au moins un agent de mise en suspension qui y est dispersé,
c) dispersion de la première phase liquide dans la deuxième phase liquide, avec formation de gouttes de la première phase liquide dans la deuxième phase liquide,
d) polymérisation de l'au moins un (méth)acrylate d'alkyle monomère contenu dans la première phase liquide et de l'au moins un polyester, avec obtention du mélange de polymères qui contient le copolymère (méth)acrylate d'alkyle-polyester,
la polymérisation de l'étape d) étant amorcée par au moins un amorceur, qui est fourni soit dans la première phase liquide de l'étape a), soit dans la deuxième phase liquide de l'étape b), **caractérisé en ce que** l'au moins un polyester comprend des motifs acide polycarboxylique et des motifs polyol, l'au moins un polyester comprenant de 0,1 à 10 % en moles de motifs acide polycarboxylique ayant une double liaison C-C, par rapport à la quantité totale des motifs acide polycarboxylique.

2. Procédé selon la revendication 1, **caractérisé en ce que** la première phase liquide contient de 0,1 à 15 % en poids de l'au moins un polyester, par rapport au poids total de la première phase liquide.

3. Procédé selon la revendication 1 ou 2, **caractérisé en ce que** la double liaison C-C contenue dans l'au moins un polyester est un groupe vinyle.

4. Procédé selon l'une des revendications 1 à 3, **caractérisé en ce que** l'au moins un (méth)acrylate d'alkyle monomère est choisi dans le groupe consistant en le méthacrylate de méthyle, le méthacrylate d'éthyle, le méthacrylate de propyle, le méthacrylate de n-butyle, le méthacrylate d'isobutyle, le méthacrylate d'isopentyle, l'acrylate de méthyle, l'acrylate de n-butyle et les mélanges de ceux-ci.

5. Procédé selon l'une des revendications 1 à 4, **caractérisé en ce que** l'au moins un amorceur est choisi dans le groupe consistant en les peroxydes, les composés azoïques et les mélanges de ceux-ci.

6. Procédé selon l'une des revendications 1 à 5, **caractérisé en ce que** l'au moins un agent de mise en suspension contenu dans la deuxième phase liquide est choisi dans le groupe consistant en les acides polyacryliques, les sels d'acides polyacryliques et les systèmes Pickering d'hydroxyde d'aluminium.

7. Procédé selon l'une des revendications 1 à 6, **caractérisé en ce que** le rapport en poids de la première phase liquide à la deuxième phase liquide est, lors de la dispersion de l'étape c), compris dans la plage de 1:2 à 2:1.

8. Procédé selon l'une des revendications 1 à 7, **caractérisé en ce que** les gouttes obtenues dans l'étape c) de la première phase liquide ont un diamètre dans la plage de 0,01 mm à 5 mm.

9. Procédé selon l'une des revendications 1 à 8, **caractérisé en ce que** la polymérisation de l'étape d) a lieu à une température dans la plage de 50 °C à 100 °C.

10. Procédé selon l'une des revendications 1 à 9, **caractérisé en ce que** le mélange de polymères obtenu dans l'étape d) est séché après l'étape d).

11. Mélange de polymères pouvant être obtenu par un procédé selon l'une des revendications 1 à 10.

12. Utilisation d'un mélange de polymères selon la revendication 11 comme liant dans des encres d'imprimerie.
